# EUROPEAN PATENT SPECIFICATION

(11) **EP 4 426 601 B1**
(45) Date of publication and mention of the grant of the patent: **31.12.2025**
(21) Application number: 22799999.2
(22) Date of filing: 02.11.2022
(51) Int. Cl.: B62B 7/06, B62B 7/08, B62B 7/04

(54) **FOLDABLE STROLLER**
ZUSAMMENKLAPPBARER KINDERWAGEN
POUSSETTE PLIANTE

(30) Priority: 03.11.2021 NL 2029603
(43) Date of publication of application: 11.09.2024
(73) Proprietor: Haas Kraan B.V., 4151CP Acquoy (NL)
(72) Inventor: DE HAAS, Fortunatus Johannes, 4151CP Acquoy (NL)
(74) Representative: Dogio Patents B.V.
(86) International application number: PCT/NL2022/050616
(87) International publication number: WO 2023/080780

(56) References cited:
- EP-A1- 3 184 401
- WO-A1-2006/116900
- WO-A1-2017/009345
- CN-A- 1 765 674
- CN-A- 110 588 758
- US-A1- 2021 229 727
- US-B1- 10 167 008

## Description

The present invention relates to a foldable stroller, movable between an unfolded state and a folded state, comprising:
a central frame element extending in a lateral direction of said stroller;
a front wheel frame element which is at one outer end pivotably connected to said central frame element around a first axis, which first axis extends in said lateral direction, and comprising at least one front wheel at its other outer end;
a push bar connector frame element which is at one outer end pivotably connected to said central frame element around a second axis, which second axis extends in said lateral direction, and comprising a push bar frame element comprising a push bar at its other outer end;
a first rear wheel frame element and a second rear wheel frame element, each connected to said central frame element at one outer end, and each comprising a rear wheel at their other outer end;
wherein said first rear wheel frame element and said second rear wheel frame element are each pivotably connected to respective opposite outer lateral ends of said central frame element around respective third and fourth axes, which third and fourth axes extend mutually substantially parallel and substantially perpendicular to said first and second axes;
a first outer end of at least one first linkage bar is pivotably connected to said front wheel frame element at a distance from said first axis;
first outer ends of respective third linkage bars are pivotably connected to each of said respective rear wheel frame elements at a distance from said third and fourth axes and second outer ends of said respective third linkage bars are pivotably connected to a movable connector element;
such that a pivoting movement of said front wheel frame element and said push bar connector frame element from the unfolded state towards each other in the folded state results in said first rear wheel frame element and said second rear wheel frame element being pivoted from the unfolded state towards each other in the folded state, and vice versa.

Such a foldable stroller is disclosed in WO 2017/009345 A1, wherein an actuation element is actuated by a user acting on a handle which causes rotation, with respect to the base frame, of the front wheel leg about the first axis and of the handel about the second axis. Simultaneously, the actuation element actuates the folding of the rear wheel legs about the third and fourth folding axis. According to WO 2017/009345 A1 a rack-gear coupling is used as kinematic connection.

There is a general need for strollers which can easily and quickly folded to compact dimensions. For instance, there are maximum dimensions in the aviation industry prescribed for hand luggage. These dimensions depend on the airline, and may vary for instance between a more generous 56 cm x 45 cm x 25 cm to a more restricted 55 cm x 36 cm x 20 cm. Ideally a stroller can be easily and quickly folded to dimensions which are smaller than or equal to the more restricted requirements, such that the stroller can be carried as cabin luggage, and furthermore the payment of extra luggage fees can be avoided, with most airlines. At the same time there exists a requirement that in the unfolded state the dimensions of the stroller are large enough for safe and easy operation of the stroller. The seat of the stroller must be wide enough for a child to sit comfortably, for instance at least 30 cm. The push bar of the stroller must extend sufficiently high, for instance at least 103, so that people can push the stroller while walking upright. The wheel base of the stroller must be large enough in order to comply with stability and safety requirements, which may be for instance at least 40 cm, and preferably the wheel base is even wider, such as at least 54 cm. The length of the wheel base must also be sufficiently large, for instance at least 45 cm. The current invention aims to provide an easily and/or quickly foldable stroller, which is robust and safe, and which satisfies the above size requirements.

To this end, a foldable stroller according to the preamble is characterized in that
a second outer end of said first linkage bar is pivotably connected to said movable connector element which extends between said first rear wheel frame element and said second rear wheel frame element; and
a first outer end of at least one second linkage bar is pivotably connected to said push bar connector frame element at a distance from said second axis and a second outer end of said second linkage bar is pivotably connected to said movable connector element.

The rear wheels are automatically pivoted towards each other when the stroller is being folded. In that manner the wheels may have a mutual distance which is equal to or smaller than the width of the central frame element in the folded state, and in the unfolded state the mutual distance may be substantially larger than the width of the central frame element. The width of the central frame element, on which the seat may be mounted, and the distance between the rear wheels in the folded state, can thus be smaller than 36 cm (falling within the scope of the maximum width for hand luggage), while the distance between the rear wheels in the unfolded state can be substantially larger, for instance 54 cm. The design of the current invention removes for instance the need to fold the central frame element and the seat, as is the case for other strollers.

According to a preferred embodiment, said central frame element is substantially H-shaped, comprising a central bar in said lateral direction and two mutually parallel bars, each at one outer end of said central bar each extending perpendicular to said central bar, wherein the outer ends of said front wheel frame element and said push bar connector frame element are connected to the outer ends of the parallel bars and the outer ends of the rear wheel frame elements are connected to the outer ends of the central bar.

According to a preferred embodiment, said push bar frame element comprising said push bar is pivotably connected to said push bar connector frame element around a fifth axis, which fifth axis extends in said lateral direction.

According to a preferred embodiment, said push bar frame element and said push bar form a substantially U-shaped element comprising a central bar forming said push bar and two mutually parallel bars each connected at a first outer end to said central bar, and each of said parallel bars is pivotably connected to said push bar connector frame element around said fifth axis.

According to a preferred embodiment, the other outer ends of said parallel bars of said push bar frame element extend beyond said fifth axis, and said other outer ends are pivotably connected to first outer ends of parallel bars of a backrest frame element, and the other outer end of said parallel bars of said backrest frame element are pivotably connected to said at least one second linkage bar at a location between, and at a distance from, the outer ends of said at least one second linkage bar.

According to a preferred embodiment, a seat frame element, forming part of a seat on which a child can sit, comprising two parallel bars at its lateral sides, is connected to said central frame element.

According to a preferred embodiment, said two parallel bars of said seat frame element are each at one end pivotably connected to said outer ends of said parallel bars of said backrest frame element, and said two parallel bars of said seat frame element are each slidingly connected to said central frame element.

According to a preferred embodiment, a footrest frame, forming part of a footrest, is pivotably connected to said seat frame element.

According to a preferred embodiment, said footrest is provided with a handle arranged to be engaged by a hand of a user.

According to a preferred embodiment, said front wheel frame element comprises two wheels at said other outer end, each extending near a longitudinal vertical plane through the lateral outer ends of the central frame element of the stroller, such that the stroller forms a quadricycle.

According to an alternative preferred embodiment, said front wheel frame element comprises a single wheel at said other outer end, extending in the central longitudinal vertical plane of the stroller, such that the stroller forms a tricycle.

The present invention will now be illustrated with reference to the drawing where
Fig. 1 is a perspective view of a first embodiment of a foldable stroller in an unfolded state;
Fig. 2 is a perspective view of the stroller of Fig. 1 without seat fabric in the unfolded state;
Fig. 3a is a respective side view and rear view of the stroller of Fig. 2 in the unfolded state;
Fig. 3b is a side view of the stroller in a first stage between the unfolded state and a folded state;
Fig. 3c is a side view of the stroller in a second stage between the unfolded state and the folded state;
Fig. 3d is a respective side view and rear view of the stroller in a first stage of the folded state;
Fig. 3e is a respective side view and rear view of the stroller in a final stage of the folded state;
Fig. 4a is a side view of the stroller in a first stage between the folded state and the unfolded state;
Fig. 4b is a side view of the stroller in a second stage between the folded state and the unfolded state;
Fig. 4c is a side view of the stroller in a third stage between the folded state and the unfolded state;
Fig. 5a is a partial rear view of the stroller of Fig. 2 in the unfolded state of Fig. 3A;
Fig. 5b is a partial rear view of the stroller in a stage between the unfolded state and the folded state;
Fig. 5c is a partial rear view of the stroller in the folded state of Fig. 3E;
Fig. 6a is a perspective view of a second embodiment of a stroller without seat fabric in an unfolded state; and
Fig. 6b is a perspective view of the stroller of Fig. 6A in a folded state.

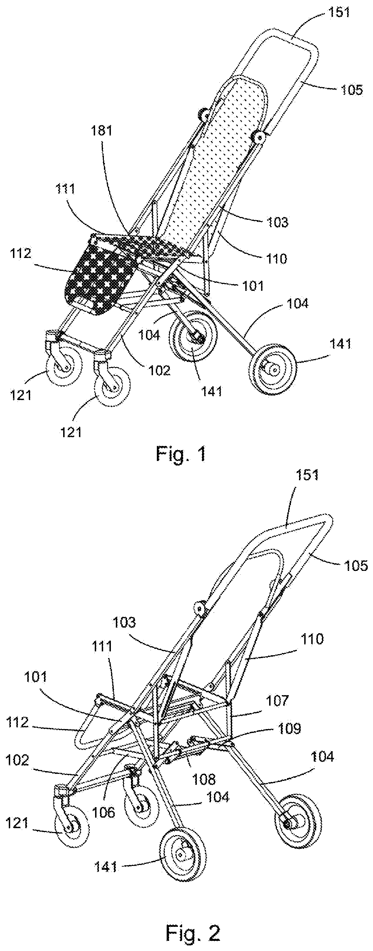

According to Figs. 1 and 2 a foldable stroller comprises an H-shaped central frame element 101, comprising a horizontal central bar in lateral direction and two mutually parallel bars, each at one outer end of said central bar and each extending perpendicular to said central bar.

A U-shaped front wheel frame element 102 comprises a horizontal central bar at the bottom and two mutually parallel bars perpendicular thereto. Each parallel bar of the front wheel frame element 102 is pivotably connected at their outer end to a respective parallel bar of the central frame element 101, around a first axis A which extends in the lateral direction. Two front wheels 121, which are preferably caster wheels, are mounted at the bottom lateral sides of the front wheel frame element 102.

A push bar connector frame element 103 comprises two parallel bars. One outer end of each parallel bar of the push bar connector frame element 103 is pivotably connected to an outer end of a respective parallel bar of the central frame element 101 around a second axis B which also extends in the lateral direction.

A first rear wheel frame element 104 and a second rear wheel frame element 104 are each pivotably connected to respective outer ends of the central bar of the central frame element 101 around respectively a third axis C and a fourth axis D. The third axis C and the fourth axis D extend mutually substantially parallel and each substantially perpendicular to the first axis A and the second axis B. A rear wheel 141 is mounted at the outer end of each rear wheel frame element 104.

A U-shaped push bar frame element 105, comprising a central bar forming a push bar 151 and two mutually parallel bars perpendicular thereto. Each parallel bar of the push bar frame element 105 is pivotably connected to a the other outer end of a respective parallel bar of the push bar connector frame element 103 around a fifth axis E which extends in the lateral direction.

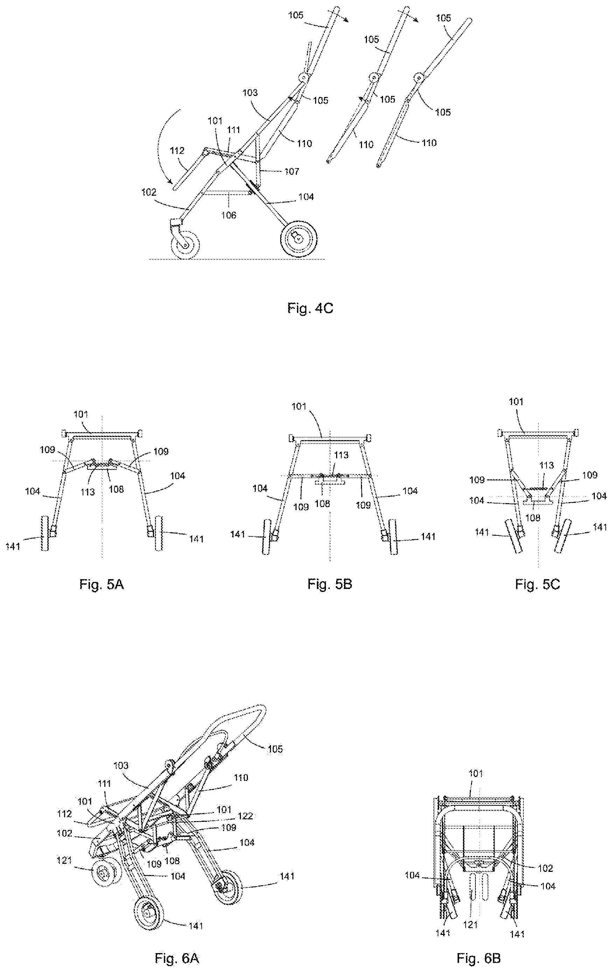

A linkage system comprising two first linkage bars 106, two second linkage bars 107 and two third linkage bars 109 are provided, which are mutually connected by means of a movable connector element 108. To that end the movable connector element 108, for instance as shown in Fig. 6A, is comprised of a frame having (at least) six spaced apart connectors at suitable locations for hingedly connecting the outer ends of the respective linkage bars 106, 107, 109. The movable connector element 108 is only connected with linkage bars 106, 107, 109 and not directly attached to any frame element, and is moved up and down between and relative to the frame elements when the stroller is being folded and unfolded.

A first outer end of each first linkage bar 106 is pivotably connected to the front wheel frame element 102 at a distance from said first axis A by means of a horizontal mounting bar 122 which connects the central parts of the parallel bars of the front wheel frame element 102, and a second outer end of each first linkage bar 106 is pivotably connected to a movable connector element 108 which extends between said rear wheel frame elements.

A first outer end of each second linkage bar 107 is pivotably connected to the push bar connector frame element 103 at a distance from the second axis B, and a second outer end of each second linkage bar 107 is pivotably connected to the movable connector element 108.

A first outer end of each third linkage bar 109 is pivotably connected to a respective rear wheel frame element 104 at a distance from said third axis C and fourth axis D, and a second outer end of each third linkage bar 109 is pivotably connected to the movable connector element 108.

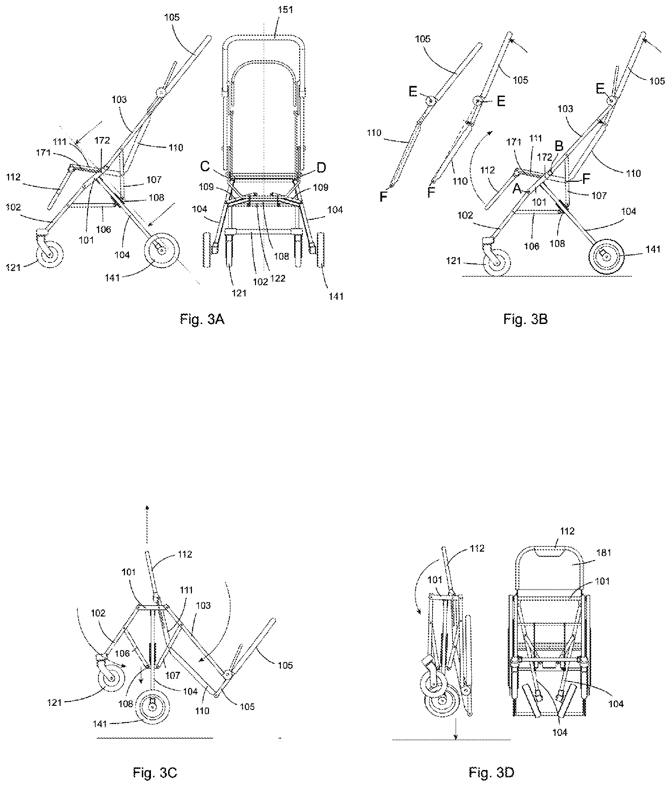

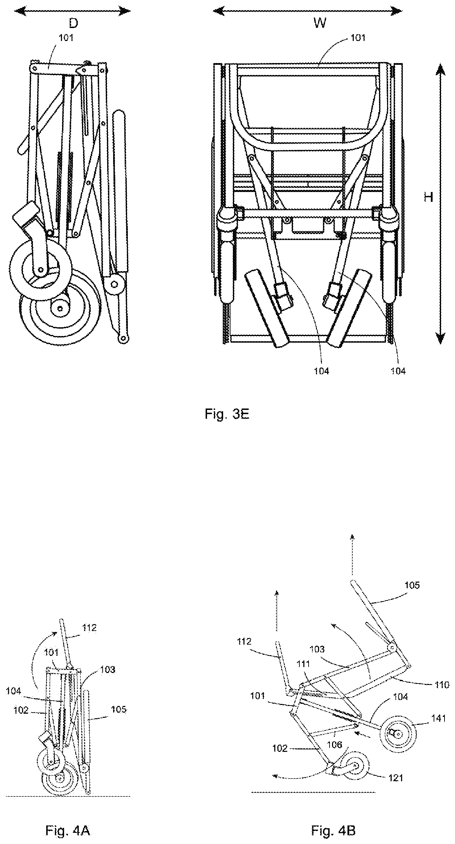

Due to this linkage system a pivoting movement of the front wheel frame element 102 and the push bar connector frame element 103 from the unfolded state towards each other in the folded state results in the rear wheel frame elements being pivoted from the unfolded towards each other in the folded position, as shown in Figs. 3A - 3E, and vice versa as shown in Figs. 4A - 4C.

A mechanism to force the pivoting movement of the front wheel frame element 102 and the push bar connector frame element 103 from the unfolded state towards each other in the folded state is formed by a mechanism which also forms a frame for the seat of the stroller. To that end the outer ends of the parallel bars of the push bar frame 105 element extend beyond the fifth axis E, and said outer ends are pivotably connected to first outer ends of parallel bars of a backrest frame element 110. The other outer ends of said parallel bars of said backrest frame 110 element are pivotably connected to a respective second linkage bar 107 at a location between, and at a distance from, the outer ends of said second linkage bar 107, such that when the push bar frame element 105 is folded as shown by the upper arrow in Fig. 3B each linkage bar 107 is pulled by the backrest frame element 110.

A seat frame element 111 comprises two parallel bars at its lateral sides, which are each at one end pivotably connected to the outer ends of the parallel bars of the backrest frame element 110, and furthermore said two parallel bars of the seat frame element 111 are each slidingly connected to the central frame element 101 by means of a slot 171 in said parallel bars which each slide over a pin 172 on the parallel bars of the central frame element 101, which pins 172 are located between the central bar and the outer ends which are connected to the push bar connector frame element 103. The movement of the linkage bars 107 force the seat frame element 111 to slide backwards, such that the protruding front part of the seat frame element 111 is pulled inwards, such that it does not stick out in the folded state.

A footrest frame 112 is pivotably connected to the seat frame 111, and can either be folded towards the other folded frame elements for a compact configuration, or be folded away therefrom in order to form a carrying handle.

As shown in Figs. 3B - 3E the stroller can be folded by pulling both the 105 and the 112 towards each other, and in the final step fold the footrest frame element 112 towards the front wheel frame element 102.

As shown in the detailed upper left corner of Fig. 3B, in the unfolded state the length of the combined parts of the push bar frame element 105 and the backrest frame element 110 between the hinge point E and the hinge point F is slightly longer than the straight line between the hinge points E, F, which are held at a relatively fixed distance from each other by the other frame elements. Thereby a tension force is present between said hinge points E, F which hold the frame parts in the unfolded state, and only by pulling hard enough the frame elements 105, 110 will be forced to mutually hinge towards the folded state (and vice versa, as shown in Fig. 4C). The back rest (which is formed by a seat fabric 181 which is attached to both the backrest frame element 110 and the lower part of the push bar frame element 105) will be folded together with the folding of the respective frame elements 105, 110.

In the folded state as shown in Fig. 3E the stroller may have compact dimensions D, W, H which comply with maximum dimensions as required in the aviation industry. In this quadricycle embodiment of the stroller the rear wheels 141 extend between the front wheels 121 in the folded state.

In order to unfold the stroller, as shown in Figs. 4A - 4B, the footrest frame element 112 is folded up and the footrest frame element 112 and the push bar frame element 105 are both pulled upwards.

As shown in Figs. 5A - 5C a tension spring 113 is attached to each third linkage bar 109 at a distance of the pivotable connection with the connector element 108, arranged to pull said third linkage bars 109 towards each other when the linkage bars 109 extend either below or above the aligned position as shown in Fig. 5B. Thereby the stroller is either pulled and held in the unfolded state as shown in Fig. 5A or pulled and held in the folded state as shown in Fig. 5C.

As shown in Fig. 1 a seat fabric 181 is attached to the backrest frame element 110, the seat frame element 111 and the footrest frame element 112 so as to form the seat of the stroller.

As shown in FIg. 6A and 6B in an alternative embodiment the front wheel frame 102 has a generally V-shape, and only one caster front wheel 121 is mounted at the point of the V-shape front wheel frame 102, whereby the stroller is a tricycle. In the folded state the front wheel 121 extends between the rear wheels 141.

The invention has thus been described by means of preferred embodiments. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The invention is defined by the claims.

## Claims

1. A foldable stroller, movable between an unfolded state and a folded state, comprising:
a central frame element (101) extending in a lateral direction of said stroller;
a front wheel frame element (102) which is at one outer end pivotably connected to said central frame element (101) around a first axis (A), which first axis extends in said lateral direction, and comprising at least one front wheel (121) at its other outer end;
a push bar connector frame element (103) which is at one outer end pivotably connected to said central frame element (101) around a second axis (B), which second axis extends in said lateral direction, and comprising a push bar frame element (105) comprising a push bar (151) at its other outer end;
a first rear wheel frame element (104) and a second rear wheel frame element (104), each connected to said central frame element (101) at one outer end, and each comprising a rear wheel (141) at their other outer end;
wherein said first rear wheel frame element (104) and said second rear wheel frame element (104) are each pivotably connected to respective opposite outer lateral ends of said central frame element (101) around respective third (C) and fourth (D) axes, which third and fourth axes extend mutually substantially parallel and substantially perpendicular to said first and second axes;
a first outer end of at least one first linkage bar (106) is pivotably connected to said front wheel frame element (102) at a distance from said first axis;
first outer ends of respective third linkage bars (109) are pivotably connected to each of said respective rear wheel frame elements (104) at a distance from said third and fourth axes and second outer ends of said respective third linkage bars are pivotably connected to a movable connector element (108);
such that a pivoting movement of said front wheel frame element (102) and said push bar connector frame element (103) from the unfolded state towards each other in the folded state results in said first rear wheel frame element (104) and said second rear wheel frame element (104) being pivoted from the unfolded state towards each other in the folded state, and vice versa;
**characterized in that**
a second outer end of said first linkage bar (106) is pivotably connected to said movable connector element (108) which extends between said first rear wheel frame element (104) and said second rear wheel frame element (104); and
a first outer end of at least one second linkage bar (107) is pivotably connected to said push bar connector frame element (103) at a distance from said second axis and a second outer end of said second linkage bar (107) is pivotably connected to said movable connector element (108).

2. The foldable stroller according to claim 1, wherein said central frame element (101) is substantially H-shaped, comprising a central bar in said lateral direction and two mutually parallel bars, each at one outer end of said central bar each extending perpendicular to said central bar, wherein the outer ends of said front wheel frame element (102) and said push bar connector frame element (103) are connected to the outer ends of the parallel bars and the outer ends of the rear wheel frame elements (104) are connected to the outer ends of the central bar.

3. The foldable stroller according to claim 1 or 2, wherein said push bar frame element (105) comprising said push bar (151) is pivotably connected to said push bar connector frame element (103) around a fifth axis (E), which fifth axis extends in said lateral direction.

4. The foldable stroller according to claim 3, wherein said push bar frame element (105) and said push bar (151) form a substantially U-shaped element comprising a central bar forming said push bar (151) and two mutually parallel bars each connected at a first outer end to said central bar, and each of said parallel bars is pivotably connected to said push bar connector frame element (103) around said fifth axis.

5. The foldable stroller according to claim 4, wherein the other outer ends of said parallel bars of said push bar frame element (105) extend beyond said fifth axis, and said other outer ends are pivotably connected to first outer ends of parallel bars of a backrest frame element (110), and the other outer end of said parallel bars of said backrest frame element (110) are pivotably connected to said at least one second linkage bar (107) at a location between, and at a distance from, the outer ends of said at least one second linkage bar (107).

6. The foldable stroller according to any of the preceding claims, wherein a seat frame element (111), forming part of a seat on which a child can sit, comprising two parallel bars at its lateral sides, is connected to said central frame element (101).

7. The foldable stroller according to claims 5 and 6, wherein said two parallel bars of said seat frame element (111) are each at one end pivotably connected to said outer ends of said parallel bars of said backrest frame element (110), and said two parallel bars of said seat frame element (111) are each slidingly connected to said central frame element (101).

8. The foldable stroller according to any of the claims 6 or 7, wherein a footrest frame (112), forming part of a footrest, is pivotably connected to said seat frame element (111).

9. The foldable stroller according to claim 8, wherein said footrest is provided with a handle arranged to be engaged by a hand of a user.

10. The foldable stroller according to any of the preceding claims, wherein said front wheel frame element (102) comprises two wheels at said other outer end, each extending near a longitudinal vertical plane through the lateral outer ends of the central frame element (101) of the stroller, such that the stroller forms a quadricycle.

11. The foldable stroller according to any of the claims 1 to 9, wherein said front wheel frame element (102) comprises a single wheel at said other outer end, extending in the central longitudinal vertical plane of the stroller, such that the stroller forms a tricycle.

## Patentansprüche

1. Klappbarer Kinderwagen, der zwischen einem aufgeklappten Zustand und einem zusammengeklappten Zustand beweglich ist, umfassend:
ein mittleres Rahmenelement (101), das sich in einer seitlichen Richtung des Kinderwagens erstreckt,
ein Vorderradrahmenelement (102), das an einem äußeren Ende um eine erste Achse (A) schwenkbar mit dem mittleren Rahmenelement (101) verbunden ist, wobei sich die erste Achse in der seitlichen Richtung erstreckt, und das mindestens ein Vorderrad (121) an seinem anderen äußeren Ende umfasst,
ein Schubstangenverbinderrahmenelement (103), das an einem äußeren Ende um eine zweite Achse (B) schwenkbar mit dem mittleren Rahmenelement (101) verbunden ist, wobei sich die zweite Achse in der seitlichen Richtung erstreckt, und das ein Schubstangenrahmenelement (105) umfasst, das eine Schubstange (151) an seinem anderen äußeren Ende umfasst,
ein erstes Hinterradrahmenelement (104) und ein zweites Hinterradrahmenelement (104), die jeweils an einem äußeren Ende mit dem mittleren Rahmenelement (101) verbunden sind und jeweils ein Hinterrad (141) an ihrem anderen äußeren Ende umfassen,
wobei das erste Hinterradrahmenelement (104) und das zweite Hinterradrahmenelement (104) jeweils um eine jeweilige dritte (C) und vierte (D) Achse schwenkbar mit jeweiligen gegenüberliegenden äußeren seitlichen Enden des mittleren Rahmenelements (101) verbunden sind, wobei sich die dritte und die vierte Achse im Wesentlichen zueinander parallel und im Wesentlichen senkrecht zu der ersten und der zweiten Achse erstrecken,
wobei ein erstes äußeres Ende mindestens einer ersten Gestängestange (106) in einem Abstand von der ersten Achse schwenkbar mit dem Vorderradrahmenelement (102) verbunden ist,
wobei erste äußere Enden jeweiliger dritter Gestängestangen (109) in einem Abstand von der dritten und der vierten Achse schwenkbar mit jedem der jeweiligen Hinterradrahmenelemente (104) verbunden sind und zweite äußere Enden der jeweiligen dritten Gestängestangen schwenkbar mit einem beweglichen Verbinderelement (108) verbunden sind,
so dass eine Schwenkbewegung des Vorderradrahmenelements (102) und des Schubstangenverbinderrahmenelements (103) aus dem aufgeklappten Zustand aufeinander zu in den zusammengeklappten Zustand dazu führt, dass das erste Hinterradrahmenelement (104) und das zweite Hinterradrahmenelement (104) aus dem aufgeklappten Zustand aufeinander zu in den zusammengeklappten Zustand geschwenkt werden, und umgekehrt,
**dadurch gekennzeichnet, dass**
ein zweites äußeres Ende der ersten Gestängestange (106) schwenkbar mit dem beweglichen Verbinderelement (108) verbunden ist, das sich zwischen dem ersten Hinterradrahmenelement (104) und dem zweiten Hinterradrahmenelement (104) erstreckt, und
ein erstes äußeres Ende mindestens einer zweiten Gestängestange (107) in einem Abstand von der zweiten Achse schwenkbar mit dem Schubstangenverbinderrahmenelement (103) verbunden ist und ein zweites äußeres Ende der zweiten Gestängestange (107) schwenkbar mit dem beweglichen Verbinderelement (108) verbunden ist.

2. Klappbarer Kinderwagen nach Anspruch 1, wobei das mittlere Rahmenelement (101) im Wesentlichen H-förmig ist und eine mittlere Stange in der seitlichen Richtung und zwei zueinander parallele Stangen umfasst, die sich jeweils an einem äußeren Ende der mittleren Stange befinden und sich jeweils senkrecht zu der mittleren Stange erstrecken, wobei die äußeren Enden des Vorderradrahmenelements (102) und des Schubstangenverbinderrahmenelements (103) mit den äußeren Enden der parallelen Stangen verbunden sind und die äußeren Enden der Hinterradrahmenelemente (104) mit den äußeren Enden der mittleren Stange verbunden sind.

3. Klappbarer Kinderwagen nach Anspruch 1 oder 2, wobei das die Schubstange (151) umfassende Schubstangenrahmenelement (105) um eine fünfte Achse (E) schwenkbar mit dem Schubstangenverbinderrahmenelement (103) verbunden ist, wobei sich die fünfte Achse in der seitlichen Richtung erstreckt.

4. Klappbarer Kinderwagen nach Anspruch 3, wobei das Schubstangenrahmenelement (105) und die Schubstange (151) ein im Wesentlichen U-förmiges Element bilden, das eine die Schubstange (151) bildende mittlere Stange und zwei zueinander parallele Stangen umfasst, die jeweils an einem ersten äußeren Ende mit der mittleren Stange verbunden sind, und wobei jede der parallelen Stangen um die fünfte Achse schwenkbar mit dem Schubstangenverbinderrahmenelement (103) verbunden ist.

5. Klappbarer Kinderwagen nach Anspruch 4, wobei sich die anderen äußeren Enden der parallelen Stangen des Schubstangenrahmenelements (105) über die fünfte Achse hinaus erstrecken und die anderen äußeren Enden schwenkbar mit ersten äußeren Enden paralleler Stangen eines Rückenlehnenrahmenelements (110) verbunden sind und das andere äußere Ende der parallelen Stangen des Rückenlehnenrahmenelements (110) an einer Stelle zwischen den äußeren Enden der mindestens einen zweiten Gestängestange (107) und in einem Abstand von diesen schwenkbar mit der mindestens einen zweiten Gestängestange (107) verbunden sind.

6. Klappbarer Kinderwagen nach einem der vorhergehenden Ansprüche, wobei ein Sitzrahmenelement (111), das Teil eines Sitzes bildet, auf dem ein Kind sitzen kann, und das zwei parallele Stangen an seinen seitlichen Seiten umfasst, mit dem mittleren Rahmenelement (101) verbunden ist.

7. Klappbarer Kinderwagen nach Ansprüchen 5 und 6, wobei die beiden parallelen Stangen des Sitzrahmenelements (111) jeweils an einem Ende schwenkbar mit den äußeren Enden der parallelen Stangen des Rückenlehnenrahmenelements (110) verbunden sind und die beiden parallelen Stangen des Sitzrahmenelements (111) jeweils verschiebbar mit dem mittleren Rahmenelement (101) verbunden sind.

8. Klappbarer Kinderwagen nach einem der Ansprüche 6 oder 7, wobei ein einen Teil einer Fußstütze bildender Fußstützenrahmen (112) schwenkbar mit dem Sitzrahmenelement (111) verbunden ist.

9. Klappbarer Kinderwagen nach Anspruch 8, wobei die Fußstütze mit einem Griff versehen ist, der dazu angeordnet ist, von einer Hand eines Benutzers in Eingriff genommen zu werden.

10. Klappbarer Kinderwagen nach einem der vorhergehenden Ansprüche, wobei das Vorderradrahmenelement (102) zwei Räder an dem anderen äußeren Ende umfasst, die sich jeweils in der Nähe einer vertikalen Längsebene durch die seitlichen äußeren Enden des mittleren Rahmenelements (101) des Kinderwagens erstrecken, so dass der Kinderwagen eine vierrädrige Vorrichtung bildet.

11. Klappbarer Kinderwagen nach einem der Ansprüche 1 bis 9, wobei das Vorderradrahmenelement (102) ein einziges Rad an dem anderen äußeren Ende umfasst, das sich in der mittleren vertikalen Längsebene des Kinderwagens erstreckt, so dass der Kinderwagen eine dreirädrige Vorrichtung bildet.

## Revendications

1. Poussette pliable, mobile entre un état déplié et un état plié, comprenant :
un élément de cadre central (101) s'étendant dans une direction latérale de ladite poussette ;
un élément de cadre à roue avant (102) qui est, à une extrémité extérieure, raccordé de façon pivotante audit élément de cadre central (101) autour d'un premier axe (A), lequel premier axe s'étend dans ladite direction latérale, et comprenant au moins une roue avant (121) à son autre extrémité extérieure ;
un élément de cadre à pièce de raccordement de barre de poussée (103) qui est, à une extrémité extérieure, raccordé de façon pivotante audit élément de cadre central (101) autour d'un deuxième axe (B), lequel deuxième axe s'étend dans ladite direction latérale, et comprenant un élément de cadre à barre de poussée (105) comprenant une barre de poussée (151) à son autre extrémité extérieure ;
un premier élément de cadre à roue arrière (104) et un second élément de cadre à roue arrière (104), chacun raccordé audit élément de cadre central (101) à une extrémité extérieure, et chacun comprenant une roue arrière (141) à leur autre extrémité extérieure ;
dans laquelle ledit premier élément de cadre à roue arrière (104) et ledit second élément de cadre à roue arrière (104) sont, chacun, raccordés de façon pivotante à des extrémités latérales extérieures opposées respectives dudit élément de cadre central (101) autour de troisième (C) et quatrième (D) axes respectifs, lesquels troisième et quatrième axes s'étendent de façon mutuellement parallèle et de façon mutuellement perpendiculaire auxdits premier et deuxième axes ;
une première extrémité extérieure d'au moins une première barre de liaison (106) est raccordée de façon pivotante audit élément de cadre à roue avant (102) à une distance dudit premier axe ;
des premières extrémités extérieures de troisièmes barres de liaison respectives (109) sont raccordées de façon pivotante à chacun desdits éléments de cadre à roue arrière respectifs (104) à une distance desdits troisième et quatrième axes, et des secondes extrémités extérieures desdites troisièmes barres de liaison respectives sont raccordées de façon pivotante à un élément à pièce de raccordement mobile (108) ;
de manière telle qu'un mouvement de pivotement dudit élément de cadre à roue avant (102) et dudit élément de cadre à pièce de raccordement de barre de poussée (103) depuis l'état déplié vers l'un l'autre dans l'état plié a pour résultat le pivotement dudit premier élément de cadre à roue arrière (104) et dudit second élément de cadre à roue arrière (104) depuis l'état déplié vers l'un l'autre dans l'état plié, et vice versa ;
**caractérisée en ce que**
une seconde extrémité extérieure de ladite première barre de liaison (106) est raccordée de façon pivotante audit élément à pièce de raccordement mobile (108) qui s'étend entre ledit premier élément de cadre à roue arrière (104) et ledit second élément de cadre à roue arrière (104) ; et
une première extrémité extérieure d'au moins une deuxième barre de liaison (107) est raccordée de façon pivotante audit élément de cadre à pièce de raccordement de barre de poussée (103) à une distance dudit deuxième axe, et une seconde extrémité extérieure de ladite deuxième barre de liaison (107) est raccordée de façon pivotante audit élément à pièce de raccordement mobile (108).

2. Poussette pliable selon la revendication 1, dans laquelle ledit élément de cadre central (101) est sensiblement en forme de H, comprenant une barre centrale dans ladite direction latérale et deux barres mutuellement parallèles, chacune à une extrémité extérieure de ladite barre centrale, chacune s'étendant perpendiculairement à ladite barre centrale, dans laquelle les extrémités extérieures dudit élément de cadre à roue avant (102) et dudit élément de cadre à pièce de raccordement de barre de poussée (103) sont raccordées aux extrémités extérieures des barres parallèles et les extrémités extérieures des éléments de cadre à roue arrière (104) sont raccordées aux extrémités extérieures de la barre centrale.

3. Poussette pliable selon la revendication 1 ou 2, dans laquelle ledit élément de cadre à barre de poussée (105) comprenant ladite barre de poussée (151) est raccordé de façon pivotante audit élément de cadre à pièce de raccordement de barre de poussée (103) autour d'un cinquième axe (E), lequel cinquième axe s'étend dans ladite direction latérale.

4. Poussette pliable selon la revendication 3, dans laquelle ledit élément de cadre à barre de poussée (105) et ladite barre de poussée (151) forment un élément sensiblement en forme de U comprenant une barre centrale formant ladite barre de poussée (151) et deux barres mutuellement parallèles chacune raccordée, à une première extrémité extérieure, à ladite barre centrale, et chacune desdites barres parallèles est raccordée de façon pivotante audit élément de cadre à pièce de raccordement de barre de poussée (103) autour dudit cinquième axe.

5. Poussette pliable selon la revendication 4, dans laquelle les autres extrémités extérieures desdites barres parallèles dudit élément de cadre à barre de poussée (105) s'étendent au-delà dudit cinquième axe, et lesdites autres extrémités extérieures sont raccordées de façon pivotante à des premières extrémités extérieures de barres parallèles d'un élément de cadre à dossier (110), et l'autre extrémité extérieure desdites barres parallèles dudit élément de cadre à dossier (110) sont raccordées de façon pivotante à ladite au moins une deuxième barre de liaison (107) à un emplacement entre les extrémités extérieures, et à une distance de celles-ci, de ladite au moins une deuxième barre de liaison (107).

6. Poussette pliable selon de quelconques des revendications précédentes, dans laquelle un élément de cadre à siège (111), faisant partie d'un siège sur lequel un enfant peut s'asseoir, comprenant deux barres parallèles à ses côtés latéraux, est raccordé audit élément de cadre central (101).

7. Poussette pliable selon les revendications 5 et 6, dans laquelle lesdites deux barres parallèles dudit élément de cadre à siège (111) sont, chacune, à une extrémité, raccordées de façon pivotante auxdites extrémités extérieures desdites barres parallèles dudit élément de cadre à dossier (110), et lesdites deux barres parallèles dudit élément de cadre à siège (111) sont, chacune, raccordées de façon coulissante audit élément de cadre central (101).

8. Poussette pliable selon de quelconques des revendications 6 ou 7, dans laquelle un cadre de repose-pieds (112), faisant partie d'un repose-pieds, est raccordé de façon pivotante audit élément de cadre à siège (111).

9. Poussette pliable selon la revendication 8, dans laquelle ledit repose-pieds est pourvu d'une poignée agencée pour être prise par une main d'un utilisateur.

10. Poussette pliable selon de quelconques des revendications précédentes, dans laquelle ledit élément de cadre à roue avant (102) comprend deux roues à ladite autre extrémité extérieure, chacune s'étendant près d'un plan vertical longitudinal à travers les extrémités extérieures latérales de l'élément de cadre central (101) de la poussette, de manière telle que la poussette forme un quadricycle.

11. Poussette pliable selon de quelconques des revendications 1 à 9, dans laquelle ledit élément de cadre à roue avant (102) comprend une seule roue à ladite autre extrémité extérieure, s'étendant dans le plan vertical longitudinal central de la poussette, de manière telle que la poussette forme un tricycle.
